# EUROPÄISCHE PATENTSCHRIFT

(11) **EP 1 019 690 B1**
(45) Veröffentlichungstag und Bekanntmachung des Hinweises auf die Patenterteilung: **26.11.2003**
(21) Anmeldenummer: 98956805.0
(22) Anmeldetag: 30.09.1998
(51) Int. Cl.: G01L 27/00, G01M 17/007

(54) **SENSOR UND VERFAHREN ZUM BETREIBEN DES SENSORS**
SENSOR AND METHOD FOR OPERATING THE SAME
DETECTEUR ET MODE DE FONCTIONNEMENT DU DETECTEUR

(30) Priorität: 30.09.1997 DE 19743288
(43) Veröffentlichungstag der Anmeldung: 19.07.2000
(73) Patentinhaber: Infineon Technologies AG, 81669 München (DE)
(72) Erfinder: DRAXELMAYR, Dieter, A-9500 Villach (AT); TIMME, Hans-Jörg, D-85521 Ottobrunn (DE)
(74) Vertreter: Zimmermann & Partner
(86) Internationale Anmeldenummer: DE9802912
(87) Internationale Veröffentlichungsnummer: WO99017089

(56) Entgegenhaltungen:
- EP-A- 0 753 728
- US-A- 5 022 270
- US-A- 5 044 203
- US-A- 5 431 057

## Beschreibung

Die Erfindung betrifft einen mikromechanischen Sensor nach dem Oberbegriff des Anspruches 1 und ein Verfahren zum Betreiben eines mikromechanischen Sensors nach Anspruch 9.

Ein derartiger mikromechanischer Sensor ist in der Form eines Silizium-Drucksensors beispielsweise aus der DE-PS 44 18 207 C1 bekannt, welche Sensoren im Wesentlichen aus einer allseitig eingespannten Membran bestehen, die sich bei einer Druckdifferenz zwischen den beiden Membranoberflächen verwölbt. Die Signalwandlung wird beispielsweise mit integrierten monokristallinen bzw. dielektrisch isolierten polykristallinen Piezowiderständen oder durch Kapazitätsmessungen zu einer festen Gegenelektrode durchgeführt (piezoresistive bzw. kapazitive Signalwandlung). Eine übliche Anforderung an solche Sensoren ist es, dass sich ihre Eigenschaften im Laufe der Zeit nicht nennenswert ändern sollen. Insbesondere bei sicherheitsrelevanten Sensoren wie beispielsweise bei aktiven Insassenschutzeiarichtungen im Kraftfahrzeugbereich (Airbag) ist es wünschenswert, dass bestimmte, zu beachtende Veränderungen, insbesondere Defekte, sofort erkannt werden und daraufhin Maßnahmen ergriffen werden, um versehentliche Fehlreaktionen auszuschließen. Ein unmittelbar durchzuführender Selbsttest für Drucksensoren ist derzeit nicht bekannt. Bei indirekten Selbsttests kann zwischen passiven und aktiven Selbsttests unterschieden werden. Ein aktiver Selbsttest kann vermittels einer definierten elektrostatischen Auslenkung und einer entsprechenden Abtastung des resultierenden Sensorsignals durchgeführt werden. Hierbei bestehen jedoch wesentliche Schwierigkeiten: Erstens benötigt man für die elektrostatische Auslenkung einer Silizium-Drucksensormembran eine Gegenelektrode, wie sie bei mittels Bulk-Micromachining hergestellten Silizium-Drucksensoren nicht vorhanden ist. Bei mittels Surface-Micromachining hergestellten Drucksensoren (oder allgemeiner bei kapazitiv abgetasteten Drucksensoren) gibt es zwar eine geeignete Gegenelektrode, es sind aber typischerweise sehr hohe Auslenkspannungen erforderlich (mindestens einige 10 V bei einem Druckbereich um etwa 1 bar), die auf Sensorbausteinen mit einer typischen Betriebsspannung von etwa 5 V jedoch nicht zur Verfügung stehen. Ein passiver Selbsttest eines Drucksensors mit nur einer Membran kann üblicherweise nur erfolgen, wenn der Sensor einem genau definierten bzw. bekannten Referenzdruck ausgesetzt ist. Dies ist aber normalerweise nicht gegeben, so dass mit einem passiven Selbsttest weder Veränderungen der Genauigkeit, noch eventuelle Beschädigungen des Sensors erkennbar sind.

Aus der EP-A-0 753·728 ist ein differenzieller Halbleiterdrucksensor mit zwei in entgegengesetzer Phase arbeitenden Meßmembranen bekannt, der durch erfassen der unterschiedlichen Auslenkungen der beiden Meßmembranen eine Beseitigung des statischen Druckfehlers und Temperaturfehlers ermöglicht.

Aus der US-A-5 022 270 ist ein Transmitter mit einem Drucksensor und einem zusätzlichen Drucksensor bekannt geworden, wobei der zusätzliche Drucksensor zur Vergrößerung des Meßbereiches oder zu Redundanzzwecken eingesetzt wird.

Aus der US-A-5 431 057 ist ein Drucksensor mit einer Vielzahl von matrixförmig angeordneten Einzelsensoren bekannt geworden, wobei die Einzelsensoren über Verbindungsarme zur Vergrößerung der Kapazität und damit Erzielung eines höheren Ausgangssignales verbunden sind.

Der Erfindung liegt die Aufgabe zugrunde, einen mikromechanischen Sensor, insbesondere einen Drucksensor, mit Selbstüber prüfung zu entwickeln, der technisch einfach herstellbar ist. Der Sensor soll weiterhin für sicherheitsrelevante Anwendungen in Kraftfahrzeugbereich geeignet sein und eine hinreichend zuverlässige, jedoch einfach durchzuführende Selbstüberprüfung ermöglichen. Eine weitere Aufgabe besteht darin, ein Verfahren zum Betrieb des Sensors anzugeben.

Diese Aufgabe wird einerseits durch einen mikromechanischen Sensor mit den Merkmalen des Anspruches 1 und andererseits durch ein Verfahren zum Betreiben eines Sensors mit den Merkmalen des Anspruches 8 gelöst.

Vorteilhafte Weiterbildungen der Erfindung ergeben sich aus den abhängigen Ansprüchen.

Erfindungsgemäß ist vorgesehen, dass das Wirkelement aus wenigstens zwei Teilstrukturen besteht, die derselben zu messenden physikalischen Größe ausgesetzt sind, jede Teilstruktur ein Mess-Signal an die Auswerteschaltung liefert, und die Auswerteschaltung eine Vergleichsschaltung aufweist, in der die wenigstens zwei Mess-Signale verglichen werden und welche als Ergebnis ein Vergleichssignal liefert. Eine wesentliche Idee der Erfindung liegt darin, dass das Wirkelement des Sensors, d.h. der normalerweise das Nutzsignal liefernde Geber, insbesondere kapazitive Geber aus wenigstens zwei Teilstrukturen besteht, deren gelieferte Informationen gemittelt werden. Partielle Beschädigungen können nun dadurch erkannt werden, dass die Signale der beiden Teilstrukturen miteinander verglichen werden. Falls beide Teilstrukturen in Ordnung sind, sollte das sich ergebende Vergleichssignal einen vorbestimmten Wert ergeben, z.B. im Falle eines Differenzsignales im Idealfall Null sein; unter Berücksichtigung von toleranzbedingten Unterschieden oder aufgrund von eventuellen Offsetkorrekturen ergibt sich ein vom vorbestimmten "Nullwert" allenfalls geringfügig abweichendes Testsignal, das jedoch von der zu messenden physikalischen Eingangsgröße (beispielsweise dem Druck) kaum abhängt. Im Falle einer partiellen Beschädigung des Sensors ergibt sich ein vom "Nullwert" deutlich abweichendes Signal, welches im Vergleich zum Sollsignal des unbeschädigten Sensors die Erkennung einer Beschädigung ermöglicht.

Dem Prinzip der Erfindung folgend sind die wenigstens zwei Teilstrukturen des Wirkelementes funktionell oder baulich gleichartig ausgebildet. Durch den identischen Aufbau und/oder eine gleichartige Beschaltung der Teilstrukturen ist sichergestellt, dass die von den Teilstrukturen des Wirkelementes gelieferten Signale praktisch identisch sind.

Bei einer besonders bevorzugten Weiterbildung des Sensors sind Ausgänge der beiden Teilstrukturen an Eingänge eines Sigma-Delta-Wandlers gekoppelt.

Bei dem erfindungsgemäßen Verfahren zum Betreiben des Sensors werden zur Erzeugung eines Nutzsignals (aus dem der Meßwert ermittelt wird) die Teilstrukturen derart angesteuert, daß deren Ausgangssignale addiert werden und werden zur Erzeugung eines Diagnosesignals (anhand dem festgestellt wird, ob der Sensor in Ordnung ist) die Teilstrukturen derart angesteuert, daß deren Ausgangssignale subtrahiert werden.

Weitere Vorteile und vorteilhafte Weiterbildungen und Ausführungsformen ergeben sich aus den nachfolgend in Verbindung mit den Figuren 1 bis 5 beschriebenen Ausführungsbeispielen. Im Einzelnen zeigen die Darstellungen in:
- Figur 1: einen schematischen Querschnitt durch einen kapazitiven Drucksensor;
- Figur 2: eine schematische Draufsicht des Drucksensors;
- Figuren 3 und 4: ein schematische Darstellung des Betriebes des Drucksensors;
- Figur 5: ein schematisches Blockdiagramm einer weiteren Beschaltung des Drucksensors mit abwechselnd gegen- oder gleichphasiger Ansteuerung.

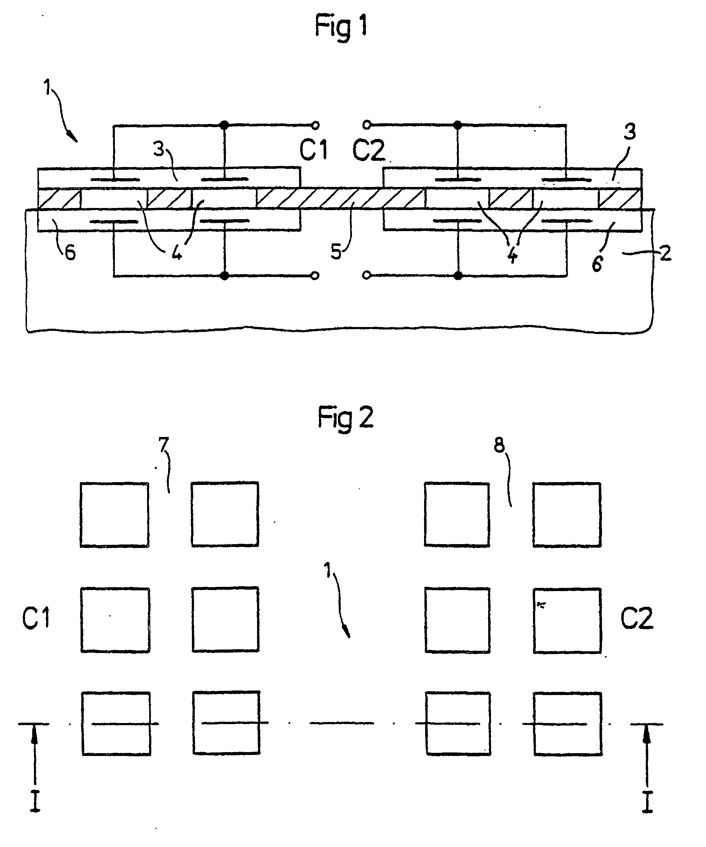

Der kapazitive Drucksensor 1 der Figuren 1 und 2 ist ein mikromechanischer Sensor. Dieser besitzt mindestens zwei auf einem Siliziumsubstrat 2 mittels mikromechanischer Verfahren gefertigte Membranen 3 aus einer dünnen, dotierten Polysiliziumfolie, welche die auf der Oberfläche des Siliziumsubstrats 2 ausgebildeten Hohlräume 4 einer Oxidschicht 5 überspannen, und sich bei Einwirkung des zu messenden Druckes verwölben. Die Membranen 3 wirken als erste Elektroden der Kapazitäten C1 und C2; als zweite oder Gegenelektrode dient jeweils ein in das Siliziumsubstrat 2 dotierter Wannenbereich 6, über dem sich die Hohlräume 4 befinden.

Der monolitische Drucksensor 1 ist somit mittels oberflächenmikromechanischer Verfahren ("Surface Micromachining") hergestellt, wobei für das Membranmaterial neben Polysilizium auch ein anderes geeignetes elektrisch leitfähiges Material verwendbar ist, um die Membranauslenkungen kapazitiv zu erfassen.

Ein wesentlicher Vorteil dieses Drucksensors gegenüber einem mittels sogenannter Bulk-Mikromechanik hergestellten Drucksensor, bei dem die Membranen aus monokristallinem Silizium gefertigt sind und eine piezorezistive Signalerfassung verwendet wird, besteht darin, dass ähnliche Prozessschritte wie bei der Herstellung von herkömmlichen integrierten Schaltkreisen zum Einsatz gelangen und demzufolge die erforderlichen (in Figuren 1 und 2 nicht gezeigten) Schaltkreise für die Signalverarbeitung mit den CMOS-Prozessschritten im Sinne einer einfacheren Integration gefertigt werden können.

Die Draufsicht nach Figur 2 zeigt zwei gleichartig aufgebaute Teilstrukturen 7 und 8 (mit Gesamtkapazitäten C1 und C2), die aus jeweils (beispielhaft) sechs quadratischen Einzelmembranen bestehen. Anzahl und Formgebung der Einzelmembranen sind an sich beliebig; von Vorteil ist, wenn die beiden Teilstrukturen 7 und 8 jeweils gleich aufgebaut sind und zu den Gesamtkapazitäten C1 und C2 zusammengeschaltet sind, wie dies in der Querschnittsansicht nach Figur 1 schematisch dargestellt ist. Durch den identischen Aufbau der Teilstrukturen sowie die Beschaltung ist sichergestellt, dass deren Kapazitätswerte C1 und C2 praktisch identisch sind. Der Absolutwert von C1 bzw. C2 liegt typischerweise bei etwa 2 pF; ein Drucksignal von 100 Pa ergibt eine Änderung des Kapazitätswerts von typischerweise 0,15 fF. Dies stellt im übrigen hohe Anforderungen an die Auswerteelektronik.

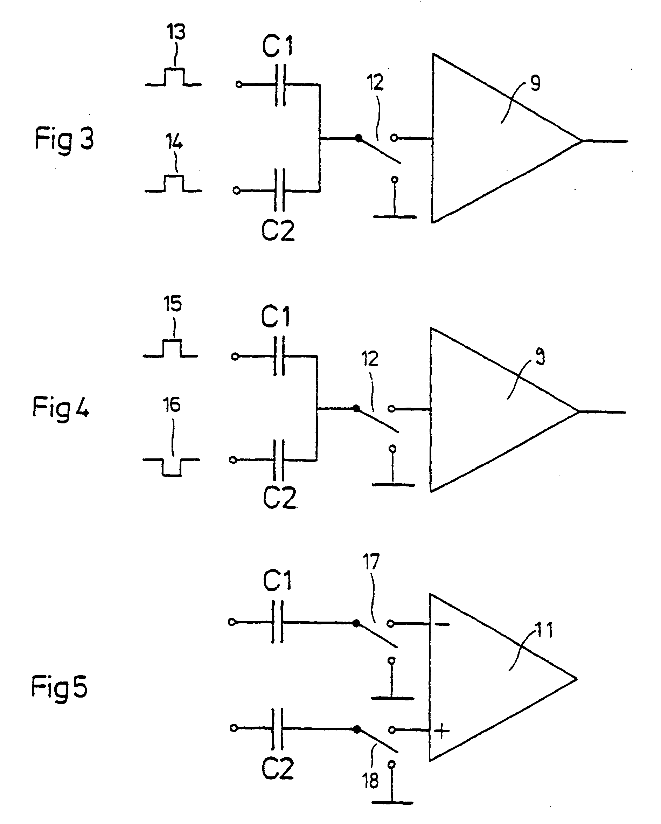

In den Blockdiagrammen der Beschaltung des Drucksensors 1 gemäß den Figuren 3 und 4 sind die Teilstrukturen des Sensors der Einfachheit halber durch die Kapazitäten C1 und C2 dargestellt und die gleichfalls auf dem Siliziumsubstrat 2 des Sensorbauelementes integriert ausgebildete Auswerteschaltung mit der Bezugsziffer 9 versehen.

Gemäß Figur 3 sind die Kapazitäten C1 und C2 durch die Signale 13,14 gleichphasig angesteuert, wobei die Ausgänge der Kapazitäten C1 und C2 gemeinsam an dem getakteten Schalter 12 anliegen, der der Schaltungsanordnung 9 vorgeschaltet ist. Die Schaltungsanordnung 9 und der Schalter 12 stehen schematisch für einen Analog-Digital(A/D)-Wandler, der wiederum einen Sigma-Delta-Modulator zweiter Ordnung und ein zweistufiges Digitaldezimierungsfilter besitzt (in den Figuren nicht näher dargestellt).

Bei dieser Ansteuerung ergibt sich ein im Wesentlichen aus der Summe der beiden Einzelsignale von C1 und C2 geliefertes Nutzsignal. Für einwandfreie Sensoren gilt: C1 ist identisch zu C2 und C1 + C2 ergeben ein druckabhängiges Nutzsignal.

Gemäß Figur 4 werden die Kapazitäten C1 und C2 durch die Signale 15,16 gegenphasig angesteuert. Bei dieser Ansteuerung ergibt sich eine Subtraktion der kapazitiven Eingangssignale und ein aus der Differenz der beiden Einzelsignale von C1 und C2 geliefertes Diagnosesignal, mit dem festgestellt wird, ob der Sensor in Ordnung ist.

Das Diagnosesignal ist bei einwandfreien Sensoren NULL (abgesehen von einer eventuellen Offsetkorrektur) und hat im Falle einer Beschädigung des Sensors einen von NULL verschiedenen Wert.

Das Prinzip der Erfindung beschränkt sich allerdings nicht auf das in den Figuren 3 und 4 ausgeführte Beschaltungsbeispiel mit entweder streng gleichphasiger oder streng gegenphasiger Ansteuerung der Einzelkapazitäten C1 und C2. Vielmehr sind auch komplexere Beschaltungen möglich.

In Figur 5 ist hierzu ein weiteres Ausführungsbeispiel dargestellt, bei dem die (wechselweise angesteuerten) Kapazitäten C1 und C2 jeweils getrennten Schaltern 17,18 zugeordnet sind, die wiederum zwei getrennten Eingängen einer als Operationsverstärkerschaltung bzw. Komparatorschaltung ausgebildeten Auswerteschaltung 11 zugeordnet sind.

### Bezugszeichenliste

- 1: kapazitiver Drucksensor
- 2: Siliziumsubstrat
- 3: Polysiliziumfolie
- 4: Hohlräume
- 5: Oxidschicht
- 6: Wannenbereich
- 7, 8: Teilstrukturen
- 9, 11: Auswerteschaltungen
- 12: getakteter Schalter
- 13, 14, 15, 16: Signale
- 17, 18: getakteter Schalter

## Patentansprüche

1. Mikromechanischer Sensor mit einem der zu messenden physikalischen Größe zugeordneten Wirkelement und einer an das Wirkelement gekoppelten elektronischen Auswerteschaltung (9, 11),
wobei
das Wirkelement aus wenigstens zwei funktionell oder baulich gleichartig ausgebildeten Teilstrukturen (C1, C2) besteht, so dass diese im Betrieb derselben zu messenden physikalischen Größe ausgesetzt sind, jede Teilstruktur (C1, C2) dergestalt ausgebildet ist, dass sie im Betrieb ein Mess-Signal an die Auswerteschaltung (9, 11) liefert, wobei die Teilstrukturen und die Auswerteschaltung in ein und demselben Substrat integriert ausgebildet sind, und die Auswerteschaltung (9, 11) eine Vergleichsschaltung aufweist zum Vergleichen der wenigstens zwei Mess-Signale und zur Erzeugung eines Vergleichssignales, so dass das Vergleichssignal im Idealfall eines aus völlig gleichartigen Teilstrukturen (C1, C2) zusammengesetzten Wirkelementes und gemeinsamer Beaufschlagung mit derselben physikalischen Größe NULL ist.

2. Sensor nach Anspruch 1,
wobei
die Auswerteschaltung einen Sigma-Delta-Wandler aufweist.

3. Sensor nach Anspruch 1 oder 2,
wobei
die Vergleichsschaltung subtraktiv ausgebildet und weiter so gestaltet ist, dass das Vergleichssignal einen gemittelten Wert, insbesondere Additions oder Subtraktionswert aus den Mess-Signalen der wenigstens zwei Teilstrukturen (C1, C2) liefert.

4. Sensor nach einem der Ansprüche 1 bis 3,
wobei
dem Wirkelement ein A/D-Wandler nachgeschaltet ist, der aus den analogen Mess-Signalen ein digitales Signal wandelt, welches in der digitalen Auswerteschaltung (9, 11) verarbeitet wird.

5. Sensor nach einem der Ansprüche 1 bis 4,
wobei
die Ansteuerung der wenigstens zwei Teilstrukturen (C1, C2) gleichphasig oder gegenphasig ist.

6. Sensor nach einem der Ansprüche 1 bis 5,
wobei
das Wirkelement aus einer Membran besteht, die sich bei einer Druckdifferenz zwischen den beiden Membranoberflächen verwölbt.

7. Sensor nach einem der Ansprüche 1 bis 6,
wobei
es sich um einen mikromechanischen Drucksensor mit kapazitiver Signalwandlung handelt.

8. Verfahren zum Betreiben eines Sensors nach einem der Ansprüche 1 bis 7, wobei
zur Erzeugung eines Nutzsignals, aus dem der Messwert ermittelt wird, die Teilstrukturen derart angesteuert werden, dass deren Ausgangssignale addiert werden und zur Erzeugung eines Diagnosesignals, anhand dem festgestellt wird, ob der Sensor in Ordnung ist, die Teilstrukturen derart angesteuert werden, dass deren Ausgangssignale subtrahiert werden.

## Claims

1. Micromechanical sensor having an active element assigned to the physical quantity to be measured, and having an electronic evaluation circuit arrangement (9, 11) coupled to the active element,
in which the active element comprises at least two functionally or constructionally identically designed partial structures (C1, C2), with the result that the latter are exposed, during operation, to the same physical quantity to be measured, each partial structure (C1, C2) is designed in such a way that it supplies, during operation, a measurement signal to the evaluation circuit (9, 11), the partial structures and the evaluation circuit being designed to be integrated in one and the same substrate, and the evaluation circuit (9, 11) has a comparison circuit for comparing the at least two measurement signals and for generating a comparison signal, with the result that the comparison signal is ZERO in the ideal case of an active element composed of completely identical partial structures (C1, C2) and of joint exposure to the same physical quantity.

2. Sensor according to Claim 1,
in which the evaluation circuit has a sigma-delta converter.

3. Sensor according to Claim 1 to 2,
in which the comparison circuit is of subtractive design and is further configured in such a way that the comparison signal supplies an averaged value, in particular addition or subtraction value from the measurement signals of the at least two partial structures (C1, C2).

4. Sensor according to one of Claims 1 to 3,
in which an A/D converter is connected downstream of the active element and converts a digital signal from the analogue measurement signals, which digital signal is processed in the digital evaluation circuit (9, 11).

5. Sensor according to one of Claims 1 to 4,
in which the driving of the at least two partial structures (C1, C2) is in-phase or in-antiphase.

6. Sensor according to one of Claims 1 to 5,
in which the active element comprises a diaphragm which bulges in the event of a pressure difference between the two diaphragm surfaces.

7. Sensor according to one of Claims 1 to 6,
in which a micromechanical pressure sensor with capacitive signal conversion is involved.

8. Method for operating a sensor according to one of Claims 1 to 7,
in which in order to generate a useful signal, from which the measured value is determined, the partial structures are driven in such a way that their output signals are added, and in order to generate a diagnostic signal, which is used to ascertain whether the sensor is in order, the partial structures are driven in such a way that their output signals are subtracted.

## Revendications

1. Détecteur micromécanique comprenant un élément actif associé à la grandeur physique à mesurer et un circuit (9, 11) électronique d'exploitation couplé à l'élément actif,
dans lequel l'élément actif est constitué d'au moins deux sous-structures (C1, C2) constituées de la même façon du point de vue fonctionnement ou du point de vue de la construction, de sorte que celles-ci sont soumises en fonctionnement à la même grandeur physique à mesurer, chaque sous-structure (C1, C2) étant constituée de façon à fournir en fonctionnement un signal de mesure au circuit (9, 11) d'exploitation, les sous-structures et le circuit d'exploitation étant constitués de manière intégrée dans un seul et même substrat, et le circuit (9, 11) d'exploitation comportant un circuit de comparaison destiné à comparer les au moins deux signaux de mesure et à produire un signal de comparaison, de sorte que le signal de comparaison est, dans le cas idéal d'un élément actif composé de sous-structures (C1, C2) entièrement identiques et soumises en commun à la même grandeur physique, égal à zéro.

2. Détecteur suivant la revendication 1, dans lequel le circuit d'exploitation comporte un convertisseur sigma-delta.

3. Détecteur suivant la revendication 1 ou 2, dans lequel le circuit de comparaison est constitué de manière soustractive et est en outre conformé de façon à ce que le signal de comparaison fournit une valeur moyenne, notamment une valeur d'addition ou de soustraction, à partir des signaux de mesure des au moins deux sous-structures (C1, C2).

4. Détecteur suivant l'une des revendications 1 à 3, dans lequel il est monté en aval de l'élément actif un convertisseur analogique/numérique qui donne, à partir des signaux de mesure analogiques, un signal numérique qui est traité dans le circuit (9, 11) numérique d'exploitation.

5. Détecteur suivant l'une des revendications 1 à 4, dans lequel la commande des au moins deux sous-structures (C1, C2) s'effectue en phase ou en opposition de phase.

6. Détecteur suivant l'une des revendications 1 à 5, dans lequel l'élément actif est constitué d'une membrane qui se courbe pour une différence de pression entre les deux surfaces de la membrane.

7. Détecteur suivant l'une des revendications 1 à 6, dans lequel il s'agit d'un détecteur de pression micromécanique à transformation capacitive du signal.

8. Procédé pour faire fonctionner un détecteur suivant l'une des revendications 1 à 7, dans lequel, pour la production d'un signal utile à partir duquel la valeur de mesure est déterminée, on commande les sous-structures en en additionnant les signaux de sortie et pour la production d'un signal de diagnostic au moyen duquel on constate que le détecteur est en bon état, on commande les sous-structures en effectuant une soustraction de leurs signaux de sortie.
